# EUROPEAN PATENT SPECIFICATION

(11) **EP 4 186 793 B1**
(45) Date of publication and mention of the grant of the patent: **15.10.2025**
(21) Application number: 22209456.7
(22) Date of filing: 24.11.2022
(51) Int. Cl.: B64D 11/02, F17D 5/06

(54) **SYSTEMS AND METHODS FOR DETECTING WATER LEAKS AND PREVENTING WASTE WATER OVERFLOW**
SYSTEME UND VERFAHREN ZUR ERKENNUNG VON WASSERLECKS UND VERHINDERUNG VON ABWASSERÜBERLAUF
SYSTÈMES ET PROCÉDÉS DE DÉTECTION DE FUITES D'EAU ET DE PRÉVENTION DE DÉBORDEMENT D'EAUX USÉES

(30) Priority: 24.11.2021 IN 202141054170; 24.06.2022 US 202217848868
(43) Date of publication of application: 31.05.2023
(73) Proprietor: B/E Aerospace, Inc., Winston-Salem, NC 27105 (US)
(72) Inventor: AGARWAL, Hardik, 734001 Siliguri (IN); HIREMATH, Manjunath, 560073 Bangalore (IN); SHIVAPPA, Chethana, 560060 Bangalore (IN); ADHINARAYANAN, Narain, 560067 Bangalore (IN)
(74) Representative: Dehns

(56) References cited:
- WO-A1-2011/012459
- WO-A1-2012/146632
- WO-A2-2006/042053
- CN-A- 112 483 908
- US-A- 5 732 417
- US-A1- 2006 174 707
- US-A1- 2015 006 091
- US-A1- 2016 289 945
- US-B1- 6 178 569

## Description

### CROSS-REFERENCE TO RELATED APPLICATIONS

This application claims priority to, and the benefit of, India Patent Application No. 202141054170, filed November 24, 2021 (DAS Code 9E5B) and titled "SYSTEMS AND METHODS FOR DETECTING WATER LEAKS AND/OR PREVENTING WASTE WATER OVERFLOW."

### FIELD

The present disclosure relates to drain systems and methods for improved overflow detection and, more particularly, improved waste water overflow detection systems and methods for use in aircraft lavatories.

### BACKGROUND

Aircraft cabins include lavatories having drain systems disposed therein. The waste water drain system may result in waste water overflow due to a faulty rinse valve being stuck in an open condition, or the like. In such a condition, waste water may flow continuously into an aircraft lavatory. Additionally, typical waste volume detection in a waste collection tank may be prone to generating erroneous readings. An overflow condition is often detected by passengers in a manual manner. WO 2006/042053 A describes an intelligent flow control unit. US 5 732 417 A discloses a vacuum toilet system protected against overflow of a toilet bowl by an overflow protection system that automatically generates an overflow condition signal when the toilet bowl is in a near-full condition and initiates a discharge valve operating cycle, in which the discharge valve of the toilet bowl is opened and closed independently of the flush member associated with the toilet bowl, in response to the overflow condition signal. WO 2012/146632 A1 discloses a vacuum toilet unit having a urinal function with reduced noise emission, system design size and system weight. The vacuum toilet unit has a triggering device for triggering the vacuum valve that is adapted in such a manner that the triggering unit may not be triggered when a sit-down toilet is in use as intended. US 2006/174707 A1 relates to systems designed to detect water or gas leaks based on analysis of vibration and sound signals along with other information; and automatically shut off a leaking water or gas infrastructure.

### SUMMARY

An aircraft is provided in accordance with claim 1. Optional embodiments are defined by the dependent claims.

The forgoing features and elements may be combined in various combinations, insofar as they fall within the scope of the appended claims. These features and elements as well as the operation of the disclosed embodiments will become more apparent considering the following description and accompanying drawings.

### BRIEF DESCRIPTION OF THE DRAWINGS

The subject matter of the present disclosure is particularly pointed out and distinctly claimed by the appended claims. A more complete understanding of the present disclosures, however, may best be obtained by referring to the detailed description and claims when considered in connection with the drawing figures, wherein like numerals denote like elements.
FIG. 1 illustrates a perspective view of a lavatory for an aircraft, in accordance with various embodiments;
FIG. 2 illustrates a schematic view of an overflow detection system, in accordance with various embodiments;
FIG. 3 illustrates a schematic view of a leak detection system, in accordance with various embodiments; and
FIG. 4 illustrates a schematic view of a control system, in accordance with various embodiments.

### DETAILED DESCRIPTION

Overflow of a toilet bowl may lead to discomfort, inconvenience to passengers, blockage of lavatory use, etc. Leakage due to a malfunctioning rinse valve may cause a toilet drainage system to continuously run and lead to an emptying of clean water and filling of a waste tank. Similarly, erroneous readings of waste level in a waste tank may lead to blocking a lavatory use unnecessarily, resulting in discomfort of passengers due to long wait lines or the like. Overflow conditions of typical plumbing systems are manually detected (e.g., via a passenger or service person upon an aircraft).

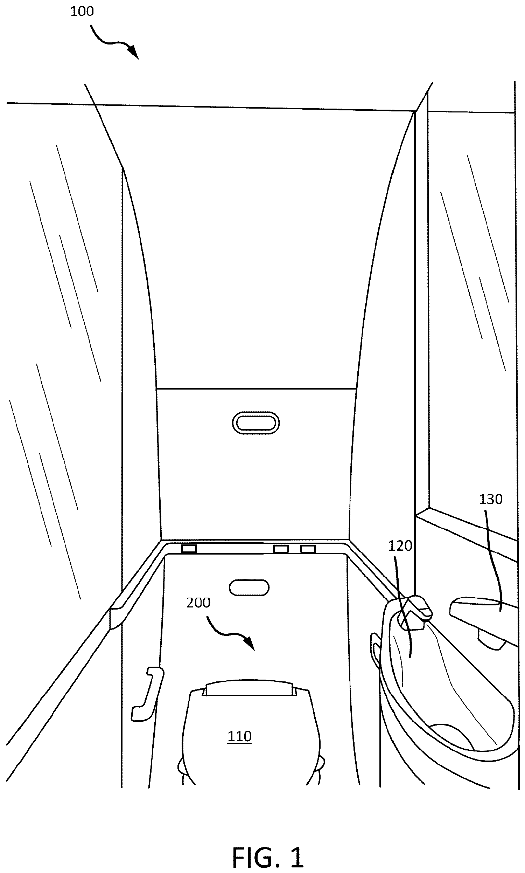

Referring now to FIG. 1, a perspective view of a lavatory 100 of an aircraft is illustrated in accordance with various embodiments. The lavatory 100 comprises a toilet 110, a water basin 120 (e.g., a sink), and a faucet 130. In various embodiments, the lavatory 100 further comprises a plumbing system 200. The plumbing system 200 is in fluid communication with the toilet 110, the water basin 120, and the faucet 130. In this regard, in response to flushing the toilet 110, waste water may be transferred throughout the plumbing system 200 as described further herein. Similarly, in response to running water via the faucet 130, waste water may be transferred throughout the plumbing system 200 as described further herein.

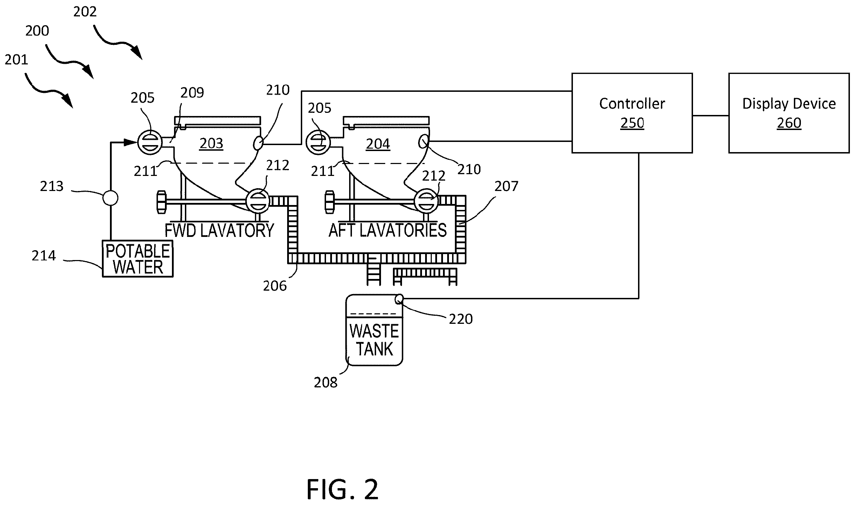

Referring now to FIG. 2, a plumbing system 200 comprising an overflow detection system 201 and a leakage detection system 202 is illustrated. In various embodiments, the plumbing system 200 comprises a rinse valve 205 associated with each toilet bowl (e.g., toilet bowls 203, 204). The rinse valve 205 is configured to open in response to external activation (e.g., via flushing of a handle, via a sensor detecting a person is no longer in front of the sensor, or the like). In response to opening the rinse valve 205, waste water (e.g., potable water) may flow (e.g., via fluid conduits 209) from a potable water tank 214 to a toilet bowl 203 or toilet bowl 204. In various embodiments, during the flushing process, waste water may be dispensed through a fluid conduits 206, 207 from each toilet bowl (e.g., toilet bowls 203, 204) to the waste tank 208. In this regard, any solid waste may be transported from the toilet bowl (e.g., toilet bowl 203 or toilet bowl 204) to the waste tank 208 as waste water, in accordance with various embodiments.

The overflow detection system 201 comprises a first sensor 210 configured to be disposed in each toilet bowl (e.g., first toilet bowl 203 and second toilet bowl 204) of the plumbing system 200. In various embodiments, a plurality of the first sensor 210 may be disposed around (e.g., partially or fully) a circumference of a respective toilet bowl (e.g., toilet bowls 203, 204).

The first sensor 210 is in electronic (i.e., electrical or wireless) communication with a controller 250. In various embodiments, controller 250 may be integrated into computer system of the aircraft. In various embodiments, controller 250 may be configured as a central network element or hub to access various systems and components of the overflow detection system 201 and the leak detection system 202.
Controller 250 may comprise a network, computer-based system, and/or software components configured to provide an access point to various systems and components of the overflow detection system 201 and the leak detection system 202. In various embodiments, controller 250 may comprise a processor. In various embodiments, controller 250 may be implemented in a single processor. In various embodiments, controller 250 may be implemented as and may include one or more processors and/or one or more tangible, non-transitory memories and be capable of implementing logic. Each processor can be a general purpose processor, a digital signal processor (DSP), an application specific integrated circuit (ASIC), a field programable gate array (FPGA) or other programable logic device, discrete gate or transistor logic, discrete hardware components, or any combination thereof. Controller 250 may comprise a processor configured to implement various logical operations in response to execution of instructions, for example, instructions stored on a non-transitory, tangible, computer-readable medium configured to communicate with controller 250.

System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals per se. Stated another way, the meaning of the term "non-transitory computer-readable medium" and "non-transitory computer-readable storage medium" should be construed to exclude only those types of transitory computer-readable media which were found in In Re Nuijten to fall outside the scope of patentable subject matter under 35 U.S.C. § 101.

In various embodiments, the first sensor is spaced apart vertically from an estimated maximum water level 211 during use of each toilet bowl (e.g., toilet bowls 203, 204). In this regard, the first sensor 210 may be prevented from activation during normal operation of the plumbing system 200. The first sensor 210 is a water sensor (i.e., configured to detect water). The first sensor 210 is configured to send a signal the controller 250 in response to detecting water. In this regard, in response to water in the toilet bowl (e.g., toilet bowl 203 or toilet bowl 204) reaching a level of the first sensor 210, the first sensor 210 sends an indication to the controller 250. The controller is configured to determine from the signal sent by the first sensor 210 a location of the sensor (e.g., in a forward lavatory, aft lavatory, or the like) and send an indication to a display device (or indicator) that an overflow condition has occurred. In this regard a crew member is notified (e.g., via the display device) that a toilet bowl (e.g., toilet bowl 203 or toilet bowl 204) is experiencing an overflow condition (i.e., water has extended vertically past the first sensor 210), and in which lavatory the overflow is occurring. Thus, the controller 250 determines based on which sensor 210 the signal is received from, which lavatory has a toilet bowl (e.g., toilet bowl 203 or toilet bowl 204) that is about to experience an overflow condition. Thus, in response to a crew member seeing the indication, the crew member may manually close an inlet shutoff valve 213. The inlet shutoff valve 213 is disposed fluidly between the potable water tank 214 and the rinse valve 205. In this regard, the inlet shutoff valve prevents potable water from flowing into the toilet bowl 203 in response to being in a closed position. In various embodiments, the controller 250 may be in electronic communication with the valve 205. Thus, in various embodiments, the controller 250 may be configured to command the valve 205 to close in response to receiving a signal from the first sensor 210 via a secondary closing mechanism (e.g., a closing mechanism independent of a primary closing mechanism for the valve 205).

In various embodiments, the second sensor 220 is disposed within the waste tank 208. The second sensor 220 may also be in electronic communication with the controller 250. In various embodiments, the second sensor 220 comprises a waste water level sensor. The waste water level sensor may extend from a top portion of the waste tank 208 towards a bottom portion of the waste tank 208. In this regard, the waste tank 208 may continuously provide a waste water level in the waste tank 208 to the controller 250. Thus, in response to a waste level exceeding a predetermined threshold (e.g., 100 % vertical height of the waste water level sensor), the controller 250 may send a signal to the display device 260. Thus, the crew may be informed that the waste tank is full and appropriate actions may be taken. In various embodiments, the controller 250 may be configured to send a warning signal at a predetermined level (e.g., 80% vertical height of the waste water level sensor) to indicate the waste tank should be emptied soon.

In various embodiments, the waste water level sensor may comprise an FEP coating disposed therein. The FEP coating may provide excellent abrasion resistance due, at least in part, to being non-porous, chemical resistant, having a low coefficient of friction, etc., in accordance with various embodiments. In various embodiments, the FEP coating may be between 0.5 mm (0.2 in) and 5 mm (2.0 in) thick, or between 1 mm (0.4 in) and 2 mm (0.8 in) thick, or approximately 1.5 mm (0.6 in) thick. The FEP coating may prevent erroneous readings experienced by typical point level sensors, in accordance with various embodiments. In particular, the FEP coating may provide a non-stick measurement probe without holes, moving parts, hidden voids, or the like. Thus, build up on the second sensor 220 may be prevented or significantly minimized, preventing inaccurate measurements, erroneous readings, or the like. In various embodiments, the waste level sensor may be a conductive sensor, facilitating use within waste tank 208 regardless of material type and regardless of any film that may build up on the walls of the waste tank 208.

In various embodiments, the second sensor 220 may be configured to provide a true volumetric output reading regardless of a shape of waste tank 208 (e.g., irregular shapes). In this regard, greater accuracy of waste water level within the waste tank 208 may be delineated.

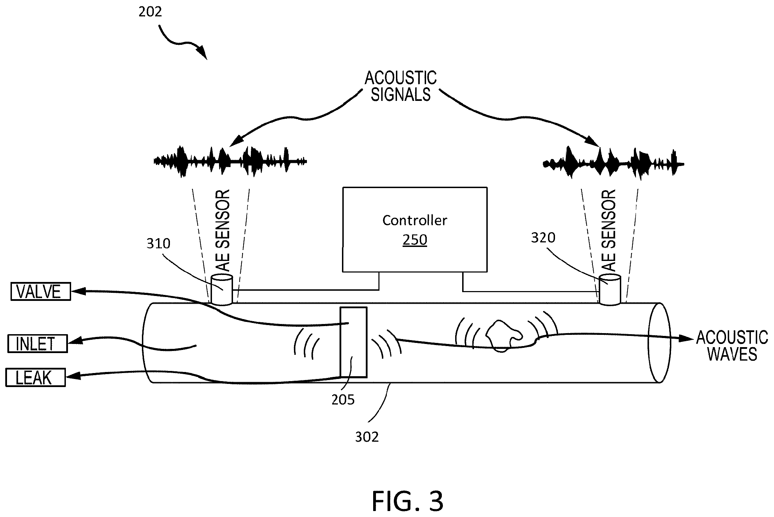

Referring now to FIG. 3, the leak detection system 202 of the plumbing system 200 from FIG. 3 is illustrated. The leak detection system 202 comprises a first acoustic emission (AE) sensor 310 and a second AE sensor 320. The first AE sensor 310 and the second AE sensor 320 may be disposed on a radially outer surface of a fluid conduit 302 in the plumbing system 200 from FIG. 2. For example, the fluid conduit 302 may be in accordance with fluid conduit 206 or fluid conduit 207 or the like. The valve 205 of the plumbing system 200 from FIG. 2 is disposed axially between the first AE sensor 310 and the second AE sensor 320. Thus, the first AE sensor 310 is disposed upstream of the valve 205 and the second AE sensor 320 is disposed downstream of the valve 205. The AE sensors 310, 320 are configured to detect, track, and measure AE signals as they propagate through the fluid conduit 302. For example, escaping fluid (e.g., at the valve 205) creates an acoustic signal as it passes through a perforation in the fluid conduit 302 or the valve 205.

In various embodiments, the controller 250 may be trained to detect a leak via a leak classifier trained with a neural network (e.g., a deep neural network (DNN), an artificial neural network (ANN), or the like). In various embodiments, any or all of the following variables of the detected acoustic signals may be utilized for leak detection by the controller 250: peak, mean, and/or standard deviation in a time domain and/or skewness, kurtosis, or peak frequency in a frequency domain. In various embodiments, the neural network may determine which variable(s) is/are best suited for determining a leak. In various embodiments, other variables may be utilized alone or in combination with the variables previously mentioned, namely energy, root-mean squared, crest factor, and/or frequency centroid. The present disclosure is not limited in this regard.

In various embodiments, a selection algorithm based on cross entropy may be employed to rank the variables from best to worst for leak detection. In various embodiments, a set of variables may be determined based on the selection algorithm. In various embodiments, leak rates and propagating distances may be factored in to consider the behavior of the variables that are most accurate relative to other variables.

In various embodiments, based on training through the neural network, variable(s) may be determined for use in the leak detection system 202. In this regard, the controller 250 may determine, based on measurements from the AE sensors 310, 320, whether there is a leak proximate the valve 205. Based on a variable set determined from the neural network a leak detection accuracy between 95% and 100% may be obtained. For example, a variable set including peak, mean, frequency, and kurtosis may provide between 95% and 100% leak detection accuracy, in accordance with various embodiments.

In response to the controller 250 determining a leak is occurring at the valve 205, an indication signal is sent to display device 260 from FIG. 2. In this regard, a crew member may be informed that a respective valve is leaking and close the valve manually, in accordance with various embodiments.

In various unclaimed examples, the leak detection system 202 and the overflow detection system 201 may be utilized independently. In various unclaimed examples, the leak detection system 202 may be utilized without the overflow detection system 201 and vice versa. Similarly, the first sensor 210 may be utilized without the second sensor 220 and vice versa.

Systems 201, 202 detect leaking and near overflow of a toilet bowl (e.g., toilet bowl 203 or toilet bowl 204) via the valve 205 in advance to prevent the overflow condition. The systems 201, 202 signal to a crew member that an overflow condition is occurring or about to occur, as opposed to awaiting visual detection by a person, increasing safety and comfortability for passengers. The systems 201, 202 provide real time monitoring of leakage of the valve 205 and potential overflow of waste water in a lavatory to crew members. In various embodiments, the systems 201, 202 are more accurate and reliable relative to manual detection systems and methods.

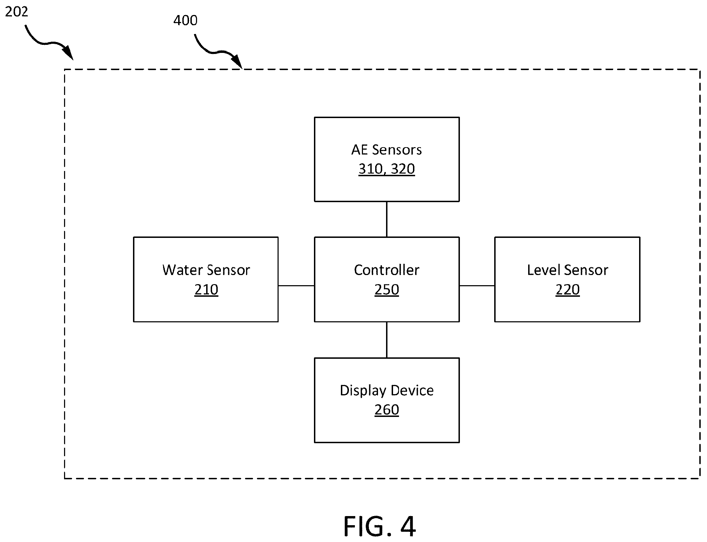

Referring now to FIG. 4, a control system 400 for a leak detection system 202 is illustrated in accordance with various embodiments. The control system 400 comprises AE sensors 310, 320, water sensor 210, the display device 260 and may comprise level sensor 220. The controller 250 receives acoustic data from the AE sensors 310, 320, water exposure data from water sensor 210, and may receive waste level data from the level sensor 220. In this regard, the controller determines whether a leak and/or an overflow condition is occurring based on the combination of data (e.g., acoustic data and water sensor data). Thus, by receiving all sets of data in control system 400, a more robust and/or accurate leak / overflow detection system may be created, in accordance with various embodiments.

In various embodiments, the controller 250 is in electronic communication with the inlet shutoff valve 213. In this regard, in response to determining a leak or an overflow condition is occurring, or about to occur, the controller 250 may command the inlet shutoff valve to transition from an open position to a closed position to prevent a flow from the potable water tank 214 into a respective toilet bowl 203, in accordance with various embodiments.

## Claims

1. An aircraft comprising;
a lavatory;
an overflow detection system (201) and a leak detection system (202) comprising:
a toilet bowl (203) disposed in the lavatory of the aircraft;
a water sensor (210) disposed in the toilet bowl, the water sensor configured to detect water;
a waste tank (208);
a display device (260);
a fluid conduit (302) extending from the toilet bowl to the waste tank (208);
a valve (205) disposed at least partially within the fluid conduit (302);
a first acoustic emission sensor (310) coupled to the fluid conduit (302) upstream of the valve;
a second acoustic emission sensor (320) coupled to the fluid conduit (302) downstream of the valve; and
a controller (250) in electronic communication with the water sensor (210), the first acoustic emission sensor and the second acoustic emission sensor, the controller (250) configured to determine a leak at the valve in response to acoustic data received from the first acoustic emission sensor and the second acoustic emission sensor,
determine, based on the water sensor a signal is received from, the lavatory which has the toilet bowl that is about to experience an overflow condition,
send a first indication to the display device (260) in response to determining the leak at the valve or the toilet bowl is about to experience the overflow condition.

2. The aircraft of claim 1, wherein the controller (250) is in electric communication with the display device (260).

3. The aircraft of any of claims 1 to 2, wherein the controller (250) is further configured to send a signal to the valve to close the valve in response to detecting the leak.

4. The aircraft of any of claims 1 to 3 comprising a plumbing system, wherein the lavatory is a first lavatory, and wherein the plumbing system comprises the first lavatory and a second lavatory having the overflow detection system and the leak detection system of any of claims 1 to 3, and optionally wherein the controller (250) is configured to determine whether the first lavatory or the second lavatory has the leak.

5. The aircraft of claim 1, wherein said controller (250) is configured to:
receive, via the water sensor (210), a first signal indicating the water sensor (210) is exposed to water, and
transmit a second signal to the display device (260) indicating an overflow condition is about to occur in the toilet bowl.

6. The aircraft of claim 5, further comprising a second toilet bowl (204) comprising a second water sensor.

7. The aircarft of claim 6, wherein the second toilet bowl is disposed in a second lavatory on the aircraft.

8. The aircraft of claim 7, wherein the controller (250) is configured to determine a location of the water sensor (210) in response to receiving the first signal and transmit the location to the display device (260) to be displayed.

9. The aircraft of any preceding claim, further comprising a second sensor disposed in a waste tank (208), the waste tank (208) in fluid communication with the toilet bowl during operation, the second sensor electronically coupled to the controller (250), the second sensor configured to measure a waste water level in the waste tank (208) and send to the controller (250).

10. The aircraft of claim 1, wherein
the valve is disposed in the fluid conduit (302) and the valve is configured to transition from a closed state to an open state to fluidly couple the toilet bowl to the waste tank (208);
a waste water level sensor (220) is disposed in the waste tank (208) and the waste water level sensor is configured to measure a waste water level within the waste tank (208);
the controller (250) is electronically coupled to the waste water level sensor (220) and the controller (250) is configured to
receive, via the waste water level sensor, the waste water level in the waste tank (208), and
transmit an indication to the display device (260) in response to the waste water level exceeding a threshold level.

11. The aircraft of claim 10, further comprising a second sensor disposed in the toilet bowl, the second sensor comprising a water sensor, and optionally wherein the second water sensor is disposed inside the toilet bowl at a height above an estimated maximum waste water threshold during operation of the toilet bowl.

12. The aircraft of claim 10 or 11, wherein the waste water level sensor comprises a fluorinated ethylene propylene (FEP) coating.

## Patentansprüche

1. Luftfahrzeug, umfassend;
eine Toilette;
ein Überlauferkennungssystem (201) und ein Leckerkennungssystem (202), umfassend:
eine Toilettenschüssel (203), die in der Toilette des Luftfahrzeugs angeordnet ist;
einen Wassersensor (210), der in der Toilettenschüssel angeordnet ist, wobei der Wassersensor ausgelegt ist, um Wasser zu erkennen;
einen Abfalltank (208);
eine Anzeigevorrichtung (260);
eine Fluidleitung (302), die sich von der Toilettenschüssel zu dem Abfalltank (208) erstreckt;
ein Ventil (205), das mindestens teilweise innerhalb der Fluidleitung (302) angeordnet ist;
einen ersten Schallemissionssensor (310), der mit der Fluidleitung (302) stromaufwärts des Ventils gekoppelt ist;
einen zweiten Schallemissionssensor (320), der mit der Fluidleitung (302) stromabwärts des Ventils gekoppelt ist; und
eine Steuerung (250) in elektronischer Kommunikation mit dem Wassersensor (210), dem ersten Schallemissionssensor und dem zweiten Schallemissionssensor, wobei die Steuerung (250) ausgelegt ist, um ein Leck an dem Ventil als Reaktion auf von dem ersten Schallemissionssensor und dem zweiten Schallemissionssensor empfangende Schalldaten zu ermitteln,
basierend auf dem Wassersensor, von dem ein Signal empfangen wird, die Toilette zu ermitteln, die die Toilettenschüssel aufweist, bei der ein Überlaufzustand unmittelbar bevorsteht,
einen ersten Hinweis an die Anzeigevorrichtung (260) als Reaktion auf Ermitteln des Lecks an dem Ventil oder dass der Überlaufzustand bei der Toilette unmittelbar bevorsteht, zu senden.

2. Luftfahrzeug nach Anspruch 1, wobei die Steuerung (250) in elektrischer Kommunikation mit der Anzeigevorrichtung (260) ist.

3. Luftfahrzeug nach einem der Ansprüche 1 bis 2, wobei die Steuerung (250) ferner ausgelegt ist, um dem Ventil als Reaktion auf das Erkennen des Lecks ein Signal zum Schließen des Ventils zu senden.

4. Luftfahrzeug nach einem der Ansprüche 1 bis 3, umfassend ein Sanitärsystem, wobei die Toilette eine erste Toilette ist, und wobei das Sanitärsystem die erste Toilette und eine zweite Toilette umfasst, aufweisend das Überlauferkennungssystem und das Leckerkennungssystem nach einem der Ansprüche 1 bis 3, und wobei die Steuerung (250) optional ausgelegt ist, um zu ermitteln, ob die erste Toilette oder die zweite Toilette das Leck aufweist.

5. Luftfahrzeug nach Anspruch 1, wobei die Steuerung (250) ausgelegt ist, um:
über den Wassersensor (210) ein erstes Signal zu empfangen, das angibt, dass der Wassersensor (210) Wasser ausgesetzt ist, und ein zweites Signal an die Anzeigevorrichtung (260) zu übertragen, das angibt, dass ein Überlaufzustand in der Toilettenschüssel unmittelbar bevorsteht.

6. Luftfahrzeug nach Anspruch 5, ferner umfassend eine zweite Toilettenschüssel (204), die einen zweiten Wassersensor umfasst.

7. Luftfahrzeug nach Anspruch 6, wobei die zweite Toilettenschüssel in einer zweiten Toilette in dem Luftfahrzeug angeordnet ist.

8. Luftfahrzeug nach Anspruch 7, wobei die Steuerung (250) ausgelegt ist, um einen Standort des Wassersensors (210) als Reaktion auf Empfangen des ersten Signals zu ermitteln und den Standort zum Anzeigen an die Anzeigevorrichtung (260) zu übermitteln.

9. Luftfahrzeug nach einem der vorhergehenden Ansprüche, ferner umfassend einen zweiten Sensor, der in einem Abfalltank (208) angeordnet ist, wobei der Abfalltank (208) während des Betriebs in Fluidkommunikation mit der Toilettenschüssel ist, der zweite Sensor, elektronisch mit der Steuerung (250) gekoppelt ist, der zweite Sensor ausgelegt ist, um einen Abwasserpegel in dem Abfalltank (208) zu messen und an die Steuerung (250) zu senden.

10. Luftfahrzeug nach Anspruch 1, wobei das Ventil in der Fluidleitung (302) angeordnet ist und das Ventil ausgelegt ist, um von einem geschlossenen Zustand in einen offenen Zustand zu wechseln, um die Toilettenschüssel fluidtechnisch mit dem Abfalltank (208) zu koppeln;
ein Abwasserpegelsensor (220) in dem Abfalltank (208) angeordnet ist und der Abwasserpegelsensor ausgelegt ist, um einen Abwasserpegel innerhalb des Abfalltanks (208) zu messen;
die Steuerung (250) elektronisch mit dem Abwasserpegelsensor (220) gekoppelt ist und die Steuerung (250) ausgelegt ist, um:
über den Abwasserpegelsensor den Abwasserpegel in dem Abfalltank (208) zu empfangen, und
als Reaktion darauf, dass der Abwasserpegel einen Schwellenpegel überschreitet, einen Hinweis an die Anzeigevorrichtung (260) zu übertragen.

11. Luftfahrzeug nach Anspruch 10, ferner umfassend einen zweiten Sensor, der in der Toilettenschüssel angeordnet ist, der zweite Sensor einen Wassersensor umfassend, und wobei der zweite Wassersensor optional innerhalb der Toilettenschüssel an einer Höhe über einem geschätzten maximalen Abwasserschwellenwert während des Betriebs der Toilettenschüssel angeordnet ist.

12. Luftfahrzeug nach Anspruch 10 oder 11, wobei der Abwasserpegelsensor eine Beschichtung aus fluoriertem Ethylenpropylen (FEP) umfasst.

## Revendications

1. Aéronef comprenant :
un cabinet de toilettes ;
un système de détection de débordement (201) et un système de détection de fuite (202) comprenant :
une cuvette de toilettes (203) disposée dans le cabinet de toilettes de l'aéronef ;
un capteur d'eau (210) disposé dans la cuvette de toilettes, le capteur d'eau étant configuré pour détecter l'eau ;
un réservoir d'eaux usées (208) ;
un dispositif d'affichage (260) ;
un conduit de fluide (302) se prolongeant de la cuvette de toilettes au réservoir d'eaux usées (208) ;
une vanne (205) disposée au moins partiellement au sein du conduit de fluide (302) ;
un premier capteur d'émission acoustique (310) couplé au conduit de fluide (302) en amont de la vanne ;
un second capteur d'émission acoustique (320) couplé au conduit de fluide (302) en aval de la vanne ; et
un dispositif de commande (250) en communication électronique avec le capteur d'eau (210), le premier capteur d'émission acoustique et le second capteur d'émission acoustique, le dispositif de commande (250) étant configuré pour déterminer une fuite au niveau de la vanne en réponse à des données acoustiques reçues du premier capteur d'émission acoustique et du second capteur d'émission acoustique,
déterminer, en fonction du capteur d'eau en provenance duquel est reçu un signal, le cabinet de toilettes dont la cuvette de toilettes est sur le point de subir une condition de débordement, envoyer une première indication au dispositif d'affichage (260) en réponse à la détermination de la fuite au niveau de la vanne ou de la cuvette de toilettes qui est sur le point de subir la condition de débordement.

2. Aéronef selon la revendication 1, dans lequel le dispositif de commande (250) est en communication électrique avec le dispositif d'affichage (260).

3. Aéronef selon l'une quelconque des revendications 1 à 2, dans lequel le dispositif de commande (250) est en outre configuré pour envoyer un signal à la vanne pour fermer la vanne en réponse à la détection de la fuite.

4. Aéronef selon l'une quelconque des revendications 1 à 3 comprenant un système de plomberie, dans lequel le cabinet de toilettes est un premier cabinet de toilettes, et dans lequel le système de plomberie comprend le premier cabinet de toilettes et un second cabinet de toilettes ayant le système de détection de débordement et le système de détection de fuite selon l'une quelconque des revendications 1 à 3, et éventuellement dans lequel le dispositif de commande (250) est configuré pour déterminer si le premier cabinet de toilettes ou le second cabinet de toilettes présente la fuite.

5. Aéronef selon la revendication 1, dans lequel ledit dispositif de commande (250) est configuré pour :
recevoir, par l'intermédiaire du capteur d'eau (210), un premier signal indiquant que le capteur d'eau (210) est exposé à l'eau, et
transmettre un second signal au dispositif d'affichage (260) indiquant qu'une condition de débordement est sur le point de se produire dans la cuvette de toilettes.

6. Aéronef selon la revendication 5, comprenant également une seconde cuvette de toilettes (204) comprenant un second capteur d'eau.

7. Aéronef selon la revendication 6, dans lequel la seconde cuvette de toilettes est disposée dans un second cabinet de toilettes sur l'aéronef.

8. Aéronef selon la revendication 7, dans lequel le dispositif de commande (250) est configuré pour déterminer un emplacement du capteur d'eau (210) en réponse à la réception du premier signal et transmettre l'emplacement au dispositif d'affichage (260) à afficher.

9. Aéronef selon une quelconque revendication précédente, comprenant également un second capteur disposé dans un réservoir d'eaux usées (208), le réservoir d'eaux usées (208) étant en communication fluidique avec la cuvette de toilettes pendant le fonctionnement, le second capteur étant couplé électroniquement au dispositif de commande (250), le second capteur étant configuré pour mesurer un niveau d'eau usée dans le réservoir d'eaux usées (208) et l'envoyer au dispositif de commande (250).

10. Aéronef selon la revendication 1, dans lequel la vanne est disposée dans le conduit de fluide (302) et la vanne est configurée pour passer d'un état fermé à un état ouvert pour coupler fluidiquement la cuvette de toilettes au réservoir d'eaux usées (208) ;
un capteur de niveau d'eaux usées (220) est disposé dans le réservoir d'eaux usées (208) et le capteur de niveau d'eaux usées est configuré pour mesurer un niveau d'eaux usées au sein du réservoir d'eaux usées (208) ;
le dispositif de commande (250) est couplé électroniquement au capteur de niveau d'eaux usées (220) et le dispositif de commande (250) est configuré pour :
recevoir, par l'intermédiaire du capteur de niveau d'eaux usées, le niveau d'eaux usées dans le réservoir d'eaux usées (208), et transmettre une indication au dispositif d'affichage (260) en réponse au niveau d'eaux usées dépassant un niveau seuil.

11. Aéronef selon la revendication 10, comprenant également un second capteur disposé dans la cuvette de toilettes, le second capteur comprenant un capteur d'eau, et éventuellement dans lequel le second capteur d'eau est disposé à l'intérieur de la cuvette de toilettes à une hauteur supérieure à un seuil d'eaux usées maximal estimé pendant le fonctionnement de la cuvette de toilettes.

12. Aéronef selon la revendication 10 ou 11, dans lequel le capteur de niveau d'eaux usées comprend un revêtement en éthylène-propylène fluoré (FEP).
